# EUROPEAN PATENT APPLICATION

(11) **EP 4 734 257 A1**
(43) Date of publication of application: **29.04.2026**
(21) Application number: 25783078.6
(22) Date of filing: 27.03.2025
(51) Int. Cl.: H01M 50/291, H01M 50/271, H01M 50/204

(54) **BATTERY PACK**

(30) Priority: 02.04.2024 KR 20240044443
(71) Applicant: LG Energy Solution, Ltd., Seoul 07335 (KR)
(72) Inventor: HUR, Nam Hoon, Daejeon 34122 (KR); SHIN, Ju Hwan, Daejeon 34122 (KR); PARK, Seung Chul, Daejeon 34122 (KR); LEE, Sang Yoon, Daejeon 34122 (KR); HWANG, In Ho, Daejeon 34122 (KR)
(74) Representative: Plasseraud IP
(86) International application number: PCT/KR2025/095128
(87) International publication number: WO 2025/211902

(57) **Abstract**

The technical idea of the present disclosure provides a battery pack including: a first cell assembly including a plurality of first battery cells; a pack frame including a base frame supporting the first cell assembly and a side frame facing a side portion of the first cell assembly and extending in a first direction; an internal frame extending in a second direction intersecting the first direction within an internal space of the pack frame; and a bonding layer bonding the side frame to the internal frame and exposed to an exterior of the pack frame.

## Description

### [Technical Field]

The present disclosure relates to a battery pack.

This application claims the benefit of priority from Korean Patent Application No. 10-2024-0044443, filed on April 02, 2024, the entire contents disclosed therein are incorporated by reference into this disclosure.

### [Background]

A battery cell is a basic unit of a secondary battery and includes a positive electrode, a negative electrode, and a separator. Unlike primary batteries, secondary batteries can be charged and discharged multiple times. Secondary batteries are widely used as energy sources for various wireless devices such as handsets, laptops, and wireless vacuum cleaners. Recently, battery packs equipped with battery cells have been widely applied in mobility devices such as electric vehicles. Battery packs are required to have a compact structure as well as high energy density.

### [Summary]

### [Technical Problem]

The technical problem to be solved by the present disclosure is to provide a battery pack.

### [Technical Solution]

To solve the above-described problem, the technical idea of the present disclosure provides a battery pack including: a first cell assembly including a plurality of first battery cells; a pack frame including a base frame supporting the first cell assembly and a side frame facing a side portion of the first cell assembly and extending in a first direction; an internal frame extending in a second direction intersecting the first direction within an internal space of the pack frame; and a bonding layer bonding the side frame to the internal frame and exposed to an exterior of the pack frame.

In exemplary embodiments, the side frame includes a hole aligned with the internal frame in the second direction, and the bonding layer is disposed within the hole of the side frame.

In exemplary embodiments, the side frame includes: an inner wall in contact with the internal frame; an outer wall exposed to an exterior of the pack frame; and a first space provided between the inner wall and the outer wall, and the bonding layer is within the inner wall of the side frame.

In exemplary embodiments, the outer wall of the side frame includes a through hole communicating with the first space of the side frame, and the bonding layer is exposed to an exterior of the pack frame through the through hole of the outer wall of the side frame.

In exemplary embodiments, the internal frame includes: an outer wall providing a second space; and an inner wall disposed within the second space of the outer wall, and the bonding layer is connected to the inner wall of the internal frame.

In exemplary embodiments, the bonding layer extends in a third direction along the inner wall of the internal frame, a length of the bonding layer in the third direction is greater than a length of the bonding layer in the first direction, and the third direction is perpendicular to the first direction and the second direction.

In exemplary embodiments, the bonding layer extends in the first direction along the inner wall of the internal frame, a length of the bonding layer in the first direction is greater than a length of the bonding layer in a third direction, and the third direction is perpendicular to the first direction and the second direction.

In exemplary embodiments, the bonding layer is spaced apart from the outer wall of the internal frame.

In exemplary embodiments, the bonding layer includes a metal.

In exemplary embodiments, the battery pack further includes a second cell assembly disposed on the base frame and including a plurality of second battery cells, and the second cell assembly is spaced apart from the first cell assembly with the internal frame therebetween.

In exemplary embodiments, the pack frame further includes a pack cover fastened to the side frame to cover the first cell assembly.

To solve the above-described problem, the technical idea of the present disclosure provides a battery pack including: a cell assembly including a plurality of battery cells; a pack frame including a base frame supporting the cell assembly and a side frame facing a side portion of the cell assembly and extending in a first direction, the side frame including a hole; an internal frame extending in a second direction intersecting the first direction within an internal space of the pack frame; and a bonding layer disposed within the hole of the side frame and bonding the side frame to the internal frame.

In exemplary embodiments, the side frame includes: an inner wall in contact with the internal frame and including the hole filled with the bonding layer; an outer wall including a through hole aligned with the bonding layer in the second direction; and a first space provided between the inner wall and the outer wall.

In exemplary embodiments, the internal frame includes: an outer wall providing a second space; and an inner wall disposed within the second space of the outer wall, and the bonding layer is extended along the inner wall of the internal frame.

In exemplary embodiments, the bonding layer includes a metal.

### [Advantageous Effects]

According to exemplary embodiments of the present disclosure, since the bonding layer does not occupy an internal space of the pack frame, bonding between the side frame and the internal frame can be achieved without loss of energy density of the battery pack due to the bonding layer occupying the internal space of the pack frame.

According to exemplary embodiments of the present disclosure, since welding for bonding between the side frame and the internal frame is performed from an exterior of the pack frame, contamination of an interior of the pack frame during welding can be prevented.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is an exploded perspective view illustrating a battery pack according to exemplary embodiments of the present disclosure.
FIG. 2 is a perspective view illustrating a portion of the battery pack of FIG. 1.
FIG. 3 is a cross-sectional view illustrating a bonding portion between an internal frame and a side frame in a battery pack according to exemplary embodiments of the present disclosure.
FIG. 4 is a perspective view illustrating an internal frame of a battery pack according to exemplary embodiments of the present disclosure.
FIG. 5 is a cross-sectional view illustrating a bonding portion between an internal frame and a side frame in a battery pack according to exemplary embodiments of the present disclosure.
FIG. 6 is a perspective view illustrating an internal frame of a battery pack according to exemplary embodiments of the present disclosure.
FIG. 7a and FIG. 7b are cross-sectional views illustrating a method of manufacturing a battery pack according to exemplary embodiments of the present disclosure.
FIG. 8a and FIG. 8b are cross-sectional views illustrating a method of manufacturing a battery pack according to exemplary embodiments of the present disclosure.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of filing the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

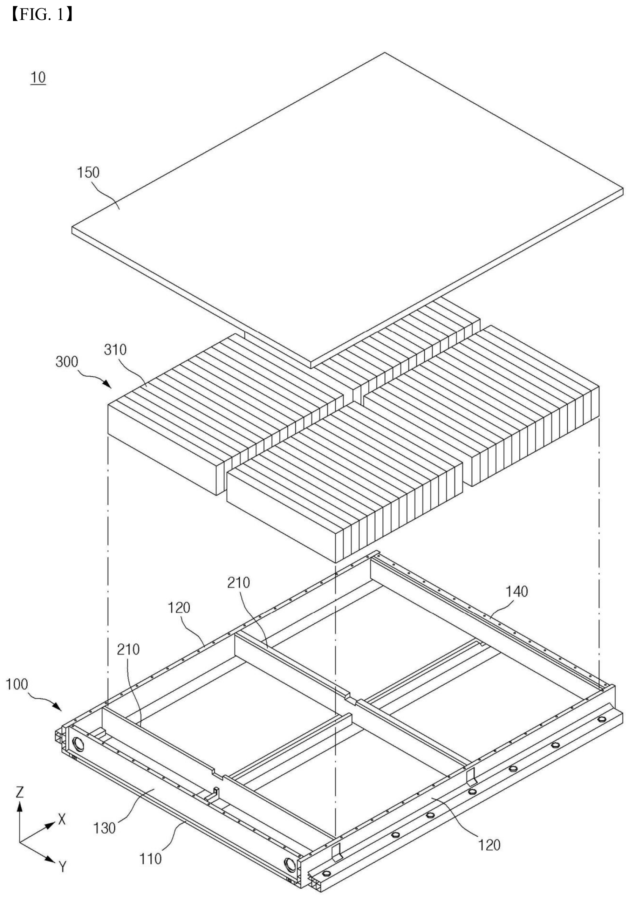

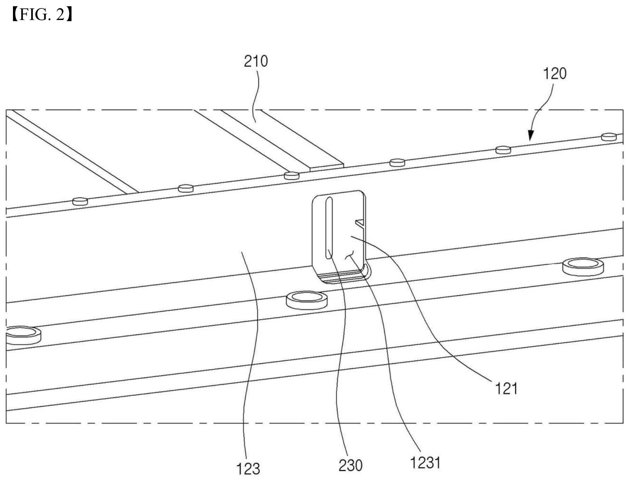

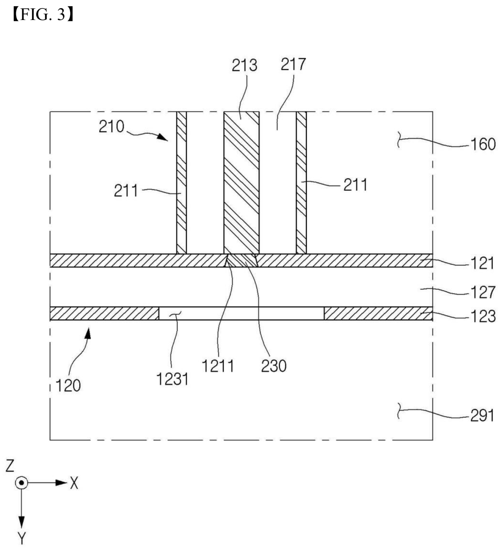

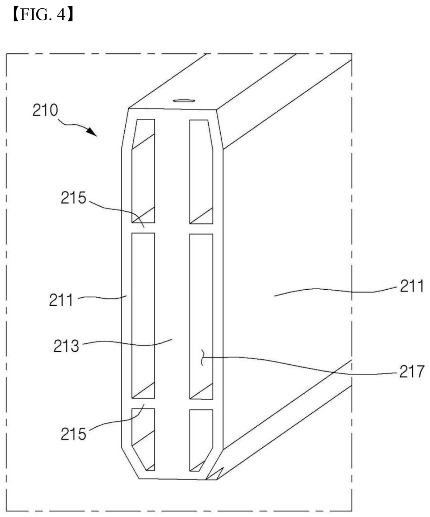

FIG. 1 is an exploded perspective view illustrating a battery pack 10 according to exemplary embodiments of the present disclosure. FIG. 2 is a perspective view illustrating a portion of the battery pack 10 of FIG. 1. FIG. 3 is a cross-sectional view illustrating a bonding portion between an internal frame 210 and a side frame 120 in a battery pack 10 according to exemplary embodiments of the present disclosure. FIG. 4 is a perspective view illustrating an internal frame 210 of a battery pack 10 according to exemplary embodiments of the present disclosure.

Referring to FIG. 1 to 4, the battery pack 10 may include a pack frame 100, an internal frame 210, a plurality of cell assemblies 300, and a bonding layer 230.

The pack frame 100 may have an internal space 160 for accommodating the plurality of cell assemblies 300. The pack frame 100 may include a base frame 110, a side frame 120, a front frame 130, a rear frame 140, and a pack cover 150.

The base frame 110 may support the plurality of cell assemblies 300. The base frame 110 may have the form of a plate extending in approximately a first horizontal direction (for example, X direction) and a second horizontal direction (for example, Y direction). The base frame 110 may include a cooling channel configured to allow cooling fluid to flow. Cooling fluid provided from the exterior of the base frame 110 may be supplied to an inlet of the cooling channel, flow along the cooling channel, and be discharged to the exterior through an outlet of the cooling channel. While the cooling fluid flows along the cooling channel, cooling of the cell assemblies 300 may be performed. The cooling fluid may include a coolant and/or a refrigerant.

The side frame 120 may be coupled to the base frame 110. The side frame 120 may extend in a first horizontal direction (for example, X direction) along an edge of the base frame 110. The side frame 120 may face a side portion of at least one corresponding cell assembly 300 among the plurality of cell assemblies 300. The pack frame 100 may include a pair of side frames 120 spaced apart with the plurality of cell assemblies 300 therebetween. The pair of side frames 120 may be spaced apart from each other in a second horizontal direction (for example, Y direction) intersecting the first horizontal direction (for example, X direction).

The side frame 120 may include an inner wall 121, an outer wall 123, and an internal space 127 provided between the inner wall 121 and the outer wall 123. The inner wall 121 of the side frame 120 may define the internal space 160 of the pack frame 100. The inner wall 121 of the side frame 120 may be connected to the internal frame 210. The outer wall 123 of the side frame 120 may be exposed to an external space 291 that is exterior of the pack frame 100. The side frame 120 may be manufactured through, for example, an extrusion process.

The front frame 130 may be coupled to the base frame 110. The front frame 130 may extend along a frontside edge of the base frame 110. The front frame 130 may extend in a second horizontal direction (for example, Y direction) between the pair of side frames 120.

The rear frame 140 may be coupled to the base frame 110. The rear frame 140 may extend along a backside edge of the base frame 110. The rear frame 140 may extend in a second horizontal direction (for example, Y direction) between the pair of side frames 120. The rear frame 140 may be spaced apart from the front frame 130 in a first horizontal direction (for example, X direction) with the plurality of cell assemblies 300 therebetween.

The rear frame 140, the front frame 130, and the pair of side frames 120 may form a rectangular-ring shaped perimeter wall surrounding the plurality of cell assemblies 300.

The pack cover 150 may be coupled on the rear frame 140, the front frame 130, and the pair of side frames 120 to cover the plurality of cell assemblies 300. The pack cover 150 may have the form of a plate extending in a first horizontal direction (for example, X direction) and a second horizontal direction (for example, Y direction).

The internal frame 210 may be disposed within the internal space 160 of the pack frame 100. The internal frame 210 may be connected to the base frame 110 and may extend in a second horizontal direction (for example, Y direction) between the pair of side frames 120. The internal frame 210 may be connected to each of the pair of side frames 120. One or more internal frames 210 may be disposed within the pack frame 100. The internal frame 210 may compartmentalize or divide the internal space 160 of the pack frame 100 into a plurality of sub-spaces. At least one cell assembly 300 may be disposed in the plurality of sub-spaces of the pack frame 100 provided by the internal frame 210. Some cell assemblies 300 among the plurality of cell assemblies 300 may be spaced apart in a first horizontal direction (for example, X direction) with the internal frame 210 therebetween.

The internal frame 210 may include an outer wall 211 providing an internal space 217, a first inner wall 213 provided within the internal space 217 of the outer wall 211, and a second inner wall 215 provided within the internal space 217 of the outer wall 211. The outer wall 211 of the internal frame 210 may form an exterior of the internal frame 210 and may be connected to a side portion of the cell assembly 300. An extension direction of the first inner wall 213 and an extension direction of the second inner wall 215 may intersect each other. When viewed in a cross-section, the first inner wall 213 may extend in a vertical direction (for example, Z direction), and the second inner wall 215 may extend in a first horizontal direction (for example, X direction). The internal frame 210 may be manufactured, for example, through an extrusion process.

The plurality of cell assemblies 300 may be mounted on the base frame 110. The plurality of cell assemblies 300 may be arranged on the base frame 110 in a first horizontal direction (for example, X direction) and/or a second horizontal direction (for example, Y direction). Each cell assembly 300 may correspond to a battery module or a cell-to-pack unit.

Each battery cell 310 is a lithium-ion battery, which is a basic unit of a secondary battery. Each battery cell 310 may include an electrode assembly, an electrolyte, and a cell case. The electrode assembly embedded in the cell case may include a positive electrode, a negative electrode, and a separator interposed between the positive electrode and the negative electrode. The electrode assembly may be any one of a jelly-roll type and a stack type depending on an assembly form. The electrode assembly of the jelly-roll type may include a winding structure of a positive electrode, a negative electrode, and a separator interposed therebetween. The electrode assembly of the stack type may include a plurality of positive electrodes, a plurality of negative electrodes, and a plurality of separators interposed therebetween that are sequentially stacked. The positive electrode may include a positive electrode current collector and a positive electrode active material. The negative electrode may include a negative electrode current collector and a negative electrode active material.

Each battery cell 310 may correspond to a pouch type battery cell, a cylindrical battery cell, or a prismatic battery cell. The electrode assembly of the pouch type battery cell is embedded in a pouch case including an aluminum laminate sheet. The electrode assembly of the cylindrical battery cell is embedded in a cylindrical metal can. The electrode assembly of the prismatic battery cell is embedded in a prismatic metal can.

The plurality of battery cells 310 provided in each cell assembly 300 may be connected in series and/or in parallel. As an example, the plurality of battery cells 310 may be connected in series with each other. As an example, the plurality of battery cells 310 may be connected in parallel with each other. As an example, when defining a set of two or more battery cells 310 connected in parallel with each other as a bank, one bank composed of two or more battery cells 310 connected in parallel with each other and another bank composed of two or more battery cells 310 connected in parallel with each other may be connected in series.

In exemplary embodiments, the plurality of battery cells 310 may be arranged in a first horizontal direction (for example, X direction), and each battery cell 310 may extend in a second horizontal direction (for example, Y direction). An electrode lead may be provided at an end of each battery cell 310 in a second horizontal direction (for example, Y direction). Electrode leads of neighboring battery cells 310 among the plurality of battery cells 310 may be electrically and physically connected to each other.

The bonding layer 230 may bond between the side frame 120 and the internal frame 210. The bonding layer 230 may include a metal. The bonding layer 230 may be formed through a welding process for bonding the side frame 120 to the internal frame 210. For example, a welding process for bonding the side frame 120 and the internal frame 210 may include arc welding, gas welding, electrical resistance welding, and/or solid-state welding. For example, the welding process for bonding the side frame 120 and the internal frame 210 may include plug welding or friction stir welding.

The bonding layer 230 may include weld metal. For example, the bonding layer 230 may include aluminum (Al), silver (Ag), copper (Cu), zinc (Zn), tin (Sn), or a combination thereof. The bonding layer 230 may contain material of the side frame 120 and material of the internal frame 210. The bonding layer 230 may include a weld bead. A heat affected zone may be provided at an interface between the bonding layer 230 and the side frame 120 and an interface between the bonding layer 230 and the internal frame 210.

The bonding layer 230 and the side frame 120 may have a difference in at least one of material composition, crystal structure, and mechanical properties. In addition, the bonding layer 230 and the internal frame 210 may have a difference in at least one of material composition, crystal structure, and mechanical properties. The mechanical properties may include, for example, ultimate tensile strength, yield strength, elongation, dislocation density, and the like.

The bonding layer 230 is provided within the side frame 120 and may be exposed to an external space 291 that is exterior of the pack frame 100. The bonding layer 230 is not exposed to the internal space 160 of the pack frame 100 in which the cell assemblies 300 are accommodated. The bonding layer 230 is provided within the side frame 120 and may be connected to the first inner wall 213 and/or the second inner wall 215 of the internal frame 210. The bonding layer 230 does not contact the outer wall 211 of the internal frame 210.

In exemplary embodiments, the bonding layer 230 may be provided within the inner wall 121 of the side frame 120. For example, the inner wall 121 of the side frame 120 may include a hole 1211 aligned with the internal frame 210 in a second horizontal direction (for example, Y direction), and the bonding layer 230 may at least partially fill the hole 1211 of the inner wall 121. The bonding layer 230 may be exposed to the internal space 127 of the side frame 120. The outer wall 123 of the side frame 120 may include a through hole 1231 communicating with the internal space 127 of the side frame 120. The through hole 1231 of the outer wall 123 of the side frame 120 may be aligned with the bonding layer 230 in a second horizontal direction (for example, Y direction), and the bonding layer 230 may be exposed to an exterior of the pack frame 100 through the through hole 1231 of the outer wall 123 of the side frame 120.

The bonding layer 230 may have a line shape extending in one direction. The bonding layer 230 may linearly extend along the first inner wall 213 or the second inner wall 215 of the internal frame 210. In exemplary embodiments, the bonding layer 230 may extend in a vertical direction (for example, Z direction) along the first inner wall 213 of the internal frame 210. The length of the bonding layer 230 in a vertical direction (for example, Z direction) may be greater than the length of the bonding layer 230 in a first horizontal direction (for example, X direction). The hole 1211 of the inner wall 121 of the side frame 120 may extend in a vertical direction (for example, Z direction), and the bonding layer 230 may extend in a vertical direction (for example, Z direction) along the hole 1211 of the inner wall 121 of the side frame 120.

### (second embodiment)

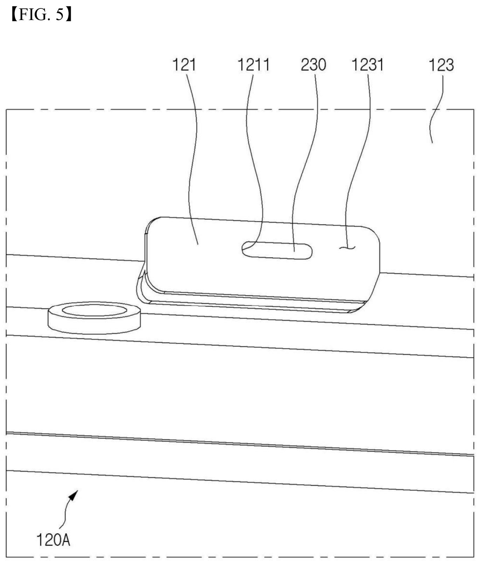

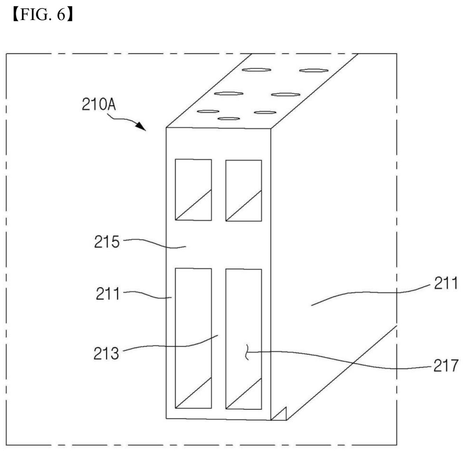

FIG. 5 is a cross-sectional view illustrating a bonding portion between an internal frame 210A and a side frame 120A in a battery pack according to exemplary embodiments of the present disclosure. FIG. 6 is a perspective view illustrating an internal frame 210A of a battery pack according to exemplary embodiments of the present disclosure.

Referring to FIG. 5 and FIG. 6 together with FIG. 1, the bonding layer 230 may extend in a first horizontal direction (for example, X direction) along the second inner wall 215 of the internal frame 210A. The length of the bonding layer 230 in a first horizontal direction (for example, X direction) may be greater than the length of the bonding layer 230 in a vertical direction (for example, Z direction). In exemplary embodiments, a hole 1211 of the inner wall 121 of the side frame 120A may extend in a first horizontal direction (for example, X direction), and the bonding layer 230 may extend in a first horizontal direction (for example, X direction) along the hole 1211 of the inner wall 121 of the side frame 120A.

### (third embodiment)

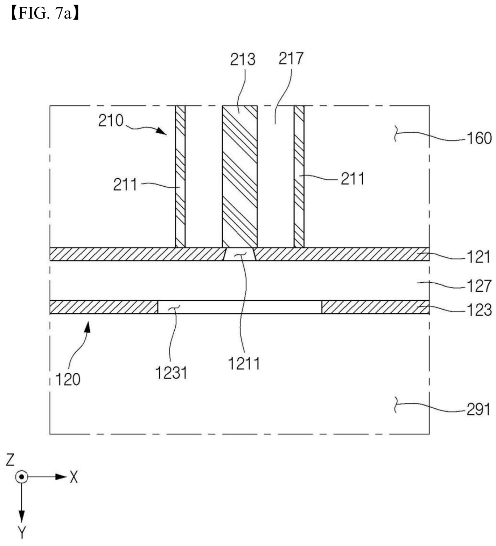

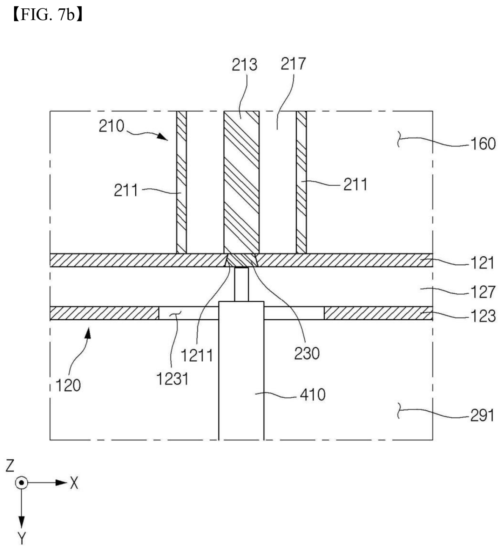

FIG. 7a and FIG. 7b are cross-sectional views illustrating a method of manufacturing a battery pack 10 according to exemplary embodiments of the present disclosure. Hereinafter, a method of manufacturing the battery pack 10 according to exemplary embodiments will be described with reference to FIG. 7a and FIG. 7b together with FIG. 1.

Referring to FIG. 7a, the side frame 120 and the internal frame 210 are disposed on the base frame 110. The side frame 120 and the internal frame 210 may each be coupled to the base frame 110. The inner wall 121 of the side frame 120 may include a hole 1211, and the internal frame 210 may be disposed on the base frame 110 such that an inner wall of the internal frame 210 is aligned with the hole 1211 of the inner wall 121 of the side frame 120 in a second horizontal direction (for example, Y direction). The inner wall of the internal frame 210 may be exposed to an exterior of the pack frame 100 through the hole 1211 of the inner wall 121 of the side frame 120, the internal space 127 of the side frame 120, and the through hole 1231 of the outer wall 123 of the side frame 120.

Referring to FIG. 7b together with FIG. 3, the bonding layer 230 is formed within the hole 1211 of the inner wall 121 of the side frame 120. The bonding layer 230 may be formed through plug welding. For example, weld metal (for example, filler metal or welding wire) may be introduced into the hole 1211 of the inner wall 121 of the side frame 120, and the weld metal may be melted using a welding tool 410. The welding tool 410 may enter the internal space 127 of the side frame 120 through the through hole 1231 of the outer wall 123 of the side frame 120. When the melted weld metal solidifies, the bonding layer 230 bonding the side frame 120 and the internal frame 210 may be formed.

Next, referring to FIG. 1, the plurality of cell assemblies 300 may be mounted on the base frame 110, and the pack cover 150 may be fastened to the front frame 130, the rear frame 140, and the pair of side frames 120.

In the method of manufacturing the battery pack 10 according to exemplary embodiments, the bonding step between the side frame 120 and the internal frame 210 described with reference to FIG. 7b may be performed after a step of mounting the plurality of cell assemblies 300 on the base frame 110 and a step of fastening the pack cover 150 to the side frame 120 are completed. The method of manufacturing the battery pack 10 according to exemplary embodiments may include a step of disposing the front frame 130, the rear frame 140, the pair of side frames 120, and the internal frame 210 on the base frame 110, a step of mounting the plurality of cell assemblies 300 on the base frame 110, a step of fastening the pack cover 150 to the front frame 130, the rear frame 140, and the pair of side frames 120, and the bonding step between the side frame 120 and the internal frame 210 described with reference to FIG. 7b.

### (fourth embodiment)

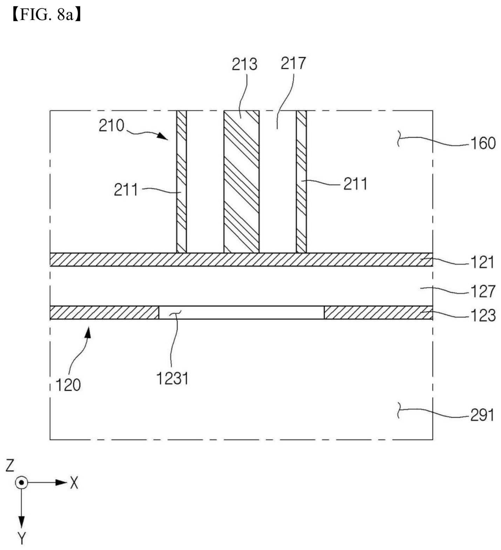

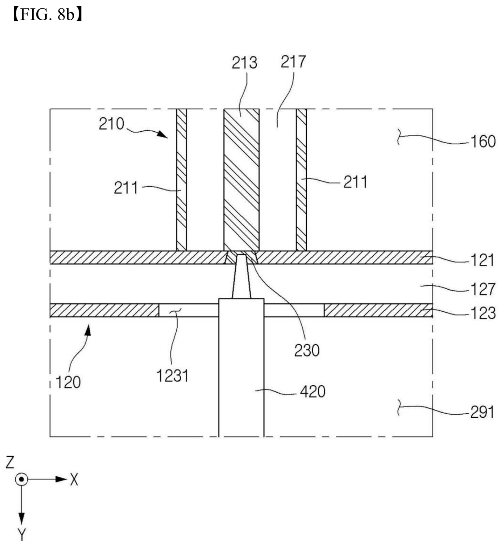

FIG. 8a and FIG. 8b are cross-sectional views illustrating a method of manufacturing a battery pack 10 according to exemplary embodiments of the present disclosure. Hereinafter, a method of manufacturing the battery pack 10 according to exemplary embodiments will be described with reference to FIG. 8a and FIG. 8b together with FIG. 1.

Referring to FIG. 8a, the side frame 120 and the internal frame 210 are disposed on the base frame 110. An end of the internal frame 210 may contact the inner wall 121 of the side frame 120. The contact between the end of the internal frame 210 and the inner wall 121 of the side frame 120 may form surface contact and may be continuous in one direction.

Referring to FIG. 8b, the bonding layer 230 is formed within the hole 1211 of the inner wall 121 of the side frame 120. The bonding layer 230 may be formed through friction stir welding configured to bond the side frame 120 and the internal frame 210 based on friction force and plastic flow phenomenon of materials. For example, the welding tool 420 may correspond to a friction stir welding tool for performing friction stir welding. The welding tool 420 may enter the internal space 127 of the side frame 120 through the through hole 1231 of the outer wall 123 of the side frame 120. A probe at an end of the welding tool 420 may rotate while in contact with the inner wall 121 of the side frame 120 and move along a predetermined welding line. While the welding tool 420 rotates, frictional heat that locally causes plastic flow of the inner wall 121 of the side frame 120 and the inner wall of the internal frame 210 is generated, and the plastically deformed portion of the inner wall 121 of the side frame 120 and the plastically deformed portion of the inner wall of the internal frame 210 are bonded to form the bonding layer 230.

Next, referring to FIG. 1, the plurality of cell assemblies 300 may be mounted on the base frame 110, and the pack cover 150 may be fastened to the front frame 130, the rear frame 140, and the pair of side frames 120.

In the method of manufacturing the battery pack 10 according to exemplary embodiments, the bonding step between the side frame 120 and the internal frame 210 described with reference to FIG. 8b may be performed after a step of mounting the plurality of cell assemblies 300 on the base frame 110 and a step of fastening the pack cover 150 to the side frame 120 are completed. The method of manufacturing the battery pack 10 according to exemplary embodiments may include a step of disposing the front frame 130, the rear frame 140, the pair of side frames 120, and the internal frame 210 on the base frame 110, a step of mounting the plurality of cell assemblies 300 on the base frame 110, a step of fastening the pack cover 150 to the front frame 130, the rear frame 140, and the pair of side frames 120, and the bonding step between the side frame 120 and the internal frame 210 described with reference to FIG. 8b.

In a battery pack according to a comparative example, a welding process for forming a welding bonding layer for bonding a side frame to an internal frame is performed in a state where a welding tool is inserted into an internal space of a pack frame. For example, the welding bonding layer may extend along an interface between the side frame and the internal frame exposed to the internal space of the pack frame. In this case, since the welding bonding layer occupies the internal space of the pack frame, energy density of the battery pack may be reduced. In addition, since the welding process for forming the welding bonding layer is performed in a state where the welding tool is inserted into the internal space of the pack frame, there is a problem that an interior of the pack frame is contaminated by spatter generated during the welding process.

According to exemplary embodiments of the present disclosure, since the bonding layer 230 does not occupy the internal space 160 of the pack frame 100, bonding between the side frame 120 and the internal frame 210 can be achieved without loss of energy density of the battery pack 10 due to the bonding layer 230 occupying the internal space 160 of the pack frame 100.

According to exemplary embodiments of the present disclosure, since welding for bonding between the side frame 120 and the internal frame 210 is performed from an exterior of the pack frame 100, contamination of an interior of the pack frame 100 during welding can be prevented.

According to exemplary embodiments of the present disclosure, welding for bonding between the side frame 120 and the internal frame 210 may be performed after fastening of the pack cover 150 is completed. In this case, since welding for bonding between the side frame 120 and the internal frame 210 is performed in a state where the internal space 160 of the pack frame 100 is sealed, contamination of an interior of the pack frame 100 during welding can be prevented.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A battery pack, comprising:
a first cell assembly comprising a plurality of first battery cells;
a pack frame comprising a base frame supporting the first cell assembly and a side frame facing a side portion of the first cell assembly and extending in a first direction;
an internal frame extending in a second direction intersecting the first direction within an internal space of the pack frame; and
a bonding layer bonding the side frame to the internal frame and exposed to an exterior of the pack frame.

2. The battery pack of claim 1, wherein the side frame comprises a hole aligned with the internal frame in the second direction, and
wherein the bonding layer is disposed within the hole of the side frame.

3. The battery pack of claim 1, wherein the side frame comprises:
an inner wall in contact with the internal frame;
an outer wall exposed to an exterior of the pack frame; and
a first space provided between the inner wall and the outer wall, and
wherein the bonding layer is within the inner wall of the side frame.

4. The battery pack of claim 3, wherein the outer wall of the side frame comprises a through hole communicating with the first space of the side frame, and
wherein the bonding layer is exposed to an exterior of the pack frame through the through hole of the outer wall of the side frame.

5. The battery pack of claim 1, wherein the internal frame comprises:
an outer wall providing a second space; and
an inner wall disposed within the second space of the outer wall, and
wherein the bonding layer is connected to the inner wall of the internal frame.

6. The battery pack of claim 5, wherein the bonding layer extends in a third direction along the inner wall of the internal frame,
wherein a length of the bonding layer in the third direction is greater than a length of the bonding layer in the first direction, and
wherein the third direction is perpendicular to the first direction and the second direction.

7. The battery pack of claim 5, wherein the bonding layer extends in the first direction along the inner wall of the internal frame,
wherein a length of the bonding layer in the first direction is greater than a length of the bonding layer in a third direction, and
wherein the third direction is perpendicular to the first direction and the second direction.

8. The battery pack of claim 5, wherein the bonding layer is spaced apart from the outer wall of the internal frame.

9. The battery pack of claim 1, wherein the bonding layer comprises a metal.

10. The battery pack of claim 1, further comprises a second cell assembly disposed on the base frame and comprising a plurality of second battery cells, and
wherein the second cell assembly is spaced apart from the first cell assembly with the internal frame therebetween.

11. The battery pack of claim 1, wherein the pack frame further comprises a pack cover fastened to the side frame to cover the first cell assembly.

12. A battery pack, comprising:
a cell assembly comprising a plurality of battery cells;
a pack frame comprising a base frame supporting the cell assembly and a side frame facing a side portion of the cell assembly and extending in a first direction, and the side frame comprising a hole;
an internal frame extending in a second direction intersecting the first direction within an internal space of the pack frame; and
a bonding layer disposed within the hole of the side frame and bonding the side frame to the internal frame.

13. The battery pack of claim 12, wherein the side frame comprises:
an inner wall in contact with the internal frame and comprising the hole filled with the bonding layer;
an outer wall comprising a through hole aligned with the bonding layer in the second direction; and
a first space provided between the inner wall and the outer wall.

14. The battery pack of claim 13, wherein the internal frame comprises:
an outer wall providing a second space; and
an inner wall disposed within the second space of the outer wall, and
the bonding layer is extended along the inner wall of the internal frame.

15. The battery pack of claim 12, wherein the bonding layer comprises a metal.
